# EUROPÄISCHE PATENTSCHRIFT

(11) **EP 2 288 969 B1**
(45) Veröffentlichungstag und Bekanntmachung des Hinweises auf die Patenterteilung: **15.07.2015**
(21) Anmeldenummer: 09779514.0
(22) Anmeldetag: 20.05.2009
(51) Int. Cl.: G05B 17/02, G05B 13/04

(54) **LEITSYSTEM EINER ANLAGE MIT MEHRSTUFIGER MODELLOPTIMIERUNG**
CONTROL SYSTEM OF A PLANT HAVING MULTI-STAGE MODEL OPTIMIZATION
SYSTÈME DE CONDUITE D'UNE INSTALLATION AVEC OPTIMISATION DU MODÈLE EN PLUSIEURS PHASES

(30) Priorität: 17.06.2008 DE 102008028777
(43) Veröffentlichungstag der Anmeldung: 02.03.2011
(73) Patentinhaber: Siemens Aktiengesellschaft, 80333 München (DE)
(72) Erfinder: FRIES, Edgar, 91077 Neunkirchen am Brand (DE); JULOSKI, Aleksandar, 90491 Nuernberg (DE); REINSCHKE, Johannes, 90425 Nürnberg (DE); SIEBER, Albrecht, 91096 Möhrendorf (DE)
(86) Internationale Anmeldenummer: PCT/EP2009/056122
(87) Internationale Veröffentlichungsnummer: WO 2010/003726

(56) Entgegenhaltungen:
- US-A- 5 740 033
- US-A1- 2002 072 828

## Beschreibung

Die vorliegende Erfindung betrifft ein Betriebsverfahren für ein Leitsystem einer Anlage der Grundstoffindustrie, die eine Anzahl von Anlagenteilen aufweist,
- wobei ein Sollwertoptimierer des Leitsystems anhand vorgegebener Zielgrößen unter Verwendung eines optimiererinternen Modells der Anlage Sollwerte für die einzelnen Anlagenteile ermittelt,
- wobei der Sollwertoptimierer zumindest für einen Teil der Anlagenteile die jeweiligen Sollwerte einem den jeweiligen Anlagenteil regelnden jeweiligen modellbasierten Regler des Leitsystems zuführt,
- wobei die jeweiligen modellbasierten Regler zumindest von dem jeweiligen Anlagenteil Istwerte entgegen nehmen,
- wobei die jeweiligen modellbasierten Regler anhand der ihnen zugeführten Sollwerte und von ihnen entgegen genommener Istwerte unter Verwendung eines reglerinternen Modells des von ihnen geregelten Anlagenteils Stellgrößen für den jeweiligen Anlagenteil ermitteln,
- wobei die jeweiligen modellbasierten Regler die von ihnen ermittelten Stellgrößen an den jeweiligen Anlagenteil ausgeben,
- wobei ein dem jeweiligen modellbasierten Regler jeweils zugeordneter Modellidentifizierer die von dem jeweiligen modellbasierten Regler an den jeweiligen Anlagenteil ausgegebenen Stellgrößen und die dem jeweiligen modellbasierten Regler zugeführten Istwerte entgegen nimmt, anhand der von ihm entgegen genommenen Stellgrößen und Istwerte Parameter ermittelt und anhand der Parameter das reglerinterne Modell des jeweiligen Anlagenteils optimiert,
- wobei der Sollwertoptimierer von den Modellidentifizierern die von den Modellidentifizierern ermittelten Parameter entgegen nimmt und unter Verwendung der von ihm entgegen genommenen Parameter das optimiererinterne Modell der Anlage optimiert.

Die vorliegende Erfindung betrifft weiterhin ein Leitsystem, das derart ausgebildet ist, dass es im Betrieb ein derartiges Betriebsverfahren ausführt.

Schließlich betrifft die vorliegende Erfindung eine Anlage der Grundstoffindustrie, die eine Anzahl von Anlagenteilen und ein die Anlagenteile in koordinierter Weise steuerndes Leitsystem aufweist, wobei das Leitsystem im Betrieb ein derartiges Betriebsverfahren ausführt.

Die oben genannten Gegenstände sind beispielsweise aus der US 5,740,033 A bekannt.

Größere Leitsysteme sind in der Regel mehrstufig aufgebaut. Meist sind unterlagerte Regler vorhanden, denen von einer übergeordneten Einrichtung Sollwerte vorgegeben werden. Die Sollwerte können hierbei momentan gültige Sollwerte sein oder Funktionen der Zeit sein (Sollwertverläufe).

In der Regel berechnen sogenannte Level-2-Systeme die Sollwerte mittels Online-Optimierungsalgorithmen, die ihrerseits auf Online-Modelle der zu steuernden Anlage zurückgreifen. Die Online-Modelle sind häufig mathematisch-physikalische Modelle. In manchen Fällen weisen die Modelle Parameter auf, die nicht mehr sinnvoll physikalisch modelliert werden können, sondern empirisch bestimmt werden müssen. Beispiele derartiger Parameter sind Wärmeübergangskoeffizienten, Reibwerte und dergleichen mehr. Die empirischen Parameter werden in der Regel während des Anlagenbetriebs adaptiert und/oder durch (adaptive) empirische Modelle repräsentiert. Ein Beispiel derartiger adaptiver empirischer Modelle sind neuronale Netze.

Wenn für einen Anlagenteil eine physikalische Modellierung nicht möglich bzw. nicht sinnvoll ist (beispielsweise der hierzu erforderliche Aufwand zu hoch ist), werden im Stand der Technik oftmals Level-2-Systeme eingesetzt, welche die Form von modellprädiktiven Reglern (englisch: MPC = model predictive control) aufweisen. Modellprädiktive Regler basieren auf vollständig empirisch bestimmten dynamischen Prozessmodellen. Die Identifikation dieser Modelle erfolgt im Regelfall offline oder in einer Kalibrierungsphase, jedoch nicht während des laufenden Betriebs. Es sind jedoch auch Online-Identifikationsverfahren bekannt.

Die Aufgabe der vorliegenden Erfindung besteht darin, die eingangs genannten Gegenstände derart auszugestalten, dass auf einfache und effiziente Weise eine Online-Optimierung möglich ist.

Die Aufgabe wird verfahrenstechnisch durch ein Betriebsverfahren mit den Merkmalen des Anspruchs 1 gelöst. Erfindungsgemäß ist - zusätzlich zu den obenstehend in Verbindung mit dem Stand der Technik erwähnten Merkmalen - vorgesehen, dass der Sollwertoptimierer die von ihm den modellbasierten Reglern zugeführten Sollwerte bei der Optimierung des optimiererinternen Modells der Anlage berücksichtigt.

Es ist möglich, dass der Sollwertoptimierer zusätzlich die von den modellbasierten Reglern ausgegebenen Stellgrößen und die den modellbasierten Reglern zugeführten Istwerte entgegen nimmt. In diesem Fall kann der Sollwertoptimierer die entgegen genommenen Stellgrößen und Istwerte bei der Optimierung des optimiererinternen Modells der Anlage berücksichtigen.

Alternativ ist es möglich, dass der Sollwertoptimierer die von den modellbasierten Reglern ausgegebenen Stellgrößen und die den modellbasierten Reglern zugeführten Istwerte nicht entgegen nimmt.

Vorzugsweise weist das optimiererinterne Modell der Anlage mit den reglerinternen Modellen der Anlagenteile korrespondierende Teilmodelle auf. In diesem Fall ist die Optimierung des optimiererinternen Modells der Anlage besonders einfach. Insbesondere ist es möglich, dass der Sollwertoptimierer die entgegen genommenen Parameter direkt den einzelnen Teilmodellen zuordnet und die Teilmodelle anhand der ihnen zugeordneten Parameter optimiert.

Es ist möglich, dass die Teilmodelle des Sollwertoptimierers mit den Modellen der modellbasierten Regler identisch sind. Diese Ausgestaltung ist insbesondere dann sinnvoll, wenn der Sollwertoptimierer die von den modellbasierten Reglern ausgegebenen Stellgrößen und die den modellbasierten Reglern zugeführten Istwerte nicht entgegen nimmt. Alternativ können die Teilmodelle des Sollwertoptimierers von den Modellen der modellbasierten Regler verschieden sein. Diese Ausgestaltung kann unabhängig davon sinnvoll sein, ob der Sollwertoptimierer die von den modellbasierten Reglern ausgegebenen Stellgrößen und die den modellbasierten Reglern zugeführten Istwerte entgegen nimmt oder nicht.

In einer vorteilhaften Ausgestaltung der vorliegenden Erfindung ist es weiterhin möglich, dass der Sollwertoptimierer zusätzlich von der Anlage andere als die den modellbasierten Reglern zugeführten Istwerte entgegen nimmt und bei der Optimierung des optimiererinternen Modells der Anlage berücksichtigt. Diese Ausgestaltung ist insbesondere dann sinnvoll, wenn die Teilmodelle des Sollwertoptimierers von den Modellen der modellbasierten Regler verschieden sind.

Im Regelfall werden die Stellgrößen ausschließlich von den modellbasierten Reglern ermittelt. In manchen Fällen ist es jedoch möglich, dass die Stellgrößen (teilweise) direkt vom Sollwertoptimierer ermittelt werden. Es ist sogar möglich, dass mindestens eine für einen der Anlagenteile bestimmte Stellgröße sowohl vom Sollwertoptimierer als auch vom korrespondierenden modellbasierten Regler ermittelt wird. In diesem Fall wird die an den jeweiligen Anlagenteil ausgegebenen Stellgröße durch Verknüpfung der beiden ermittelten Stellgrößen ermittelt. Beispielsweise kann eine (gewichtete oder ungewichtete) Mittelwertbildung erfolgen oder stets die größere oder die kleinere der beiden Stellgrößen ausgegeben werden.

Die Aufgabe wird weiterhin einrichtungstechnisch durch ein Leitsystem mit den Merkmalen des Anspruchs 8 gelöst. Erfindungsgemäß ist das Leitsystem derart ausgebildet, dass es im Betrieb ein erfindungsgemäßes Betriebsverfahren ausführt.

Anlagentechnisch wird die Aufgabe durch eine Anlage der Grundstoffindustrie mit den Merkmalen des Anspruchs 9 gelöst. Erfindungsgemäß weist die Anlage eine Anzahl von Anlagenteilen und ein die Anlagenteile in koordinierter Weise steuerndes Leitsystem auf, wobei das Leitsystem derart ausgebildet ist, dass es im Betrieb ein erfindungsgemäßes Betriebsverfahren ausführt.

Prinzipiell kann die Anlage der Grundstoffindustrie beliebig ausgebildet sein. Insbesondere kann es sich um eine Anlage der Papierindustrie handeln.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: ein Leitsystem des Standes der Technik,
- FIG 2: einen Ausschnitt von FIG 1,
- FIG 3: ein erfindungsgemäßes Leitsystem,
- FIG 4: einen modellbasierten Regler,
- FIG 5: einen Sollwertoptimierer,
- FIG 6: eine Variante des Leitsystems von FIG 3,
- FIG 7: Teile eines Sollwertoptimierers und von modellbasierten Reglern und
- FIG 8: eine weitere Variante des Leitsystems von FIG 3.

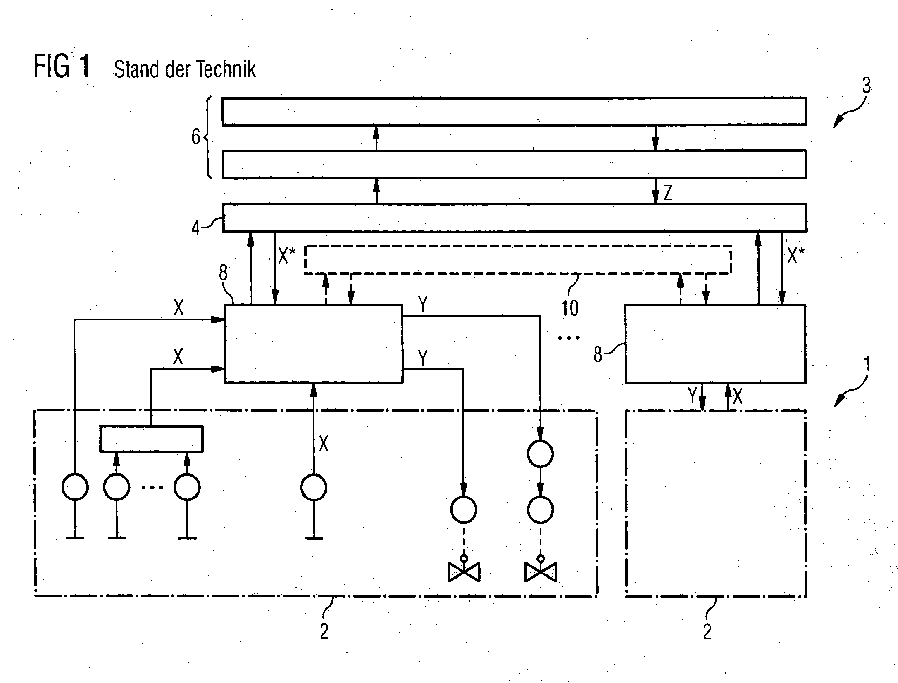

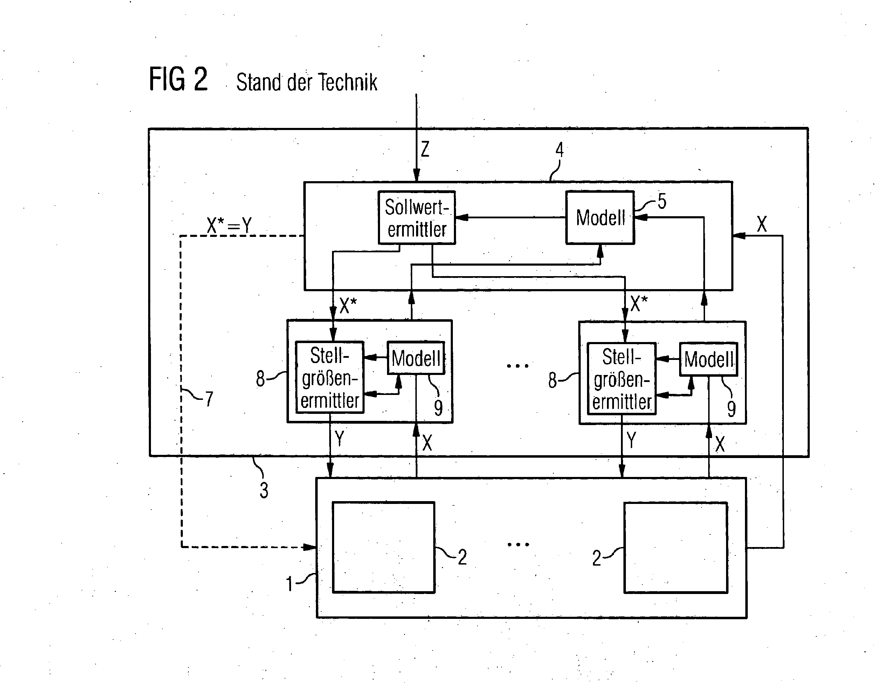

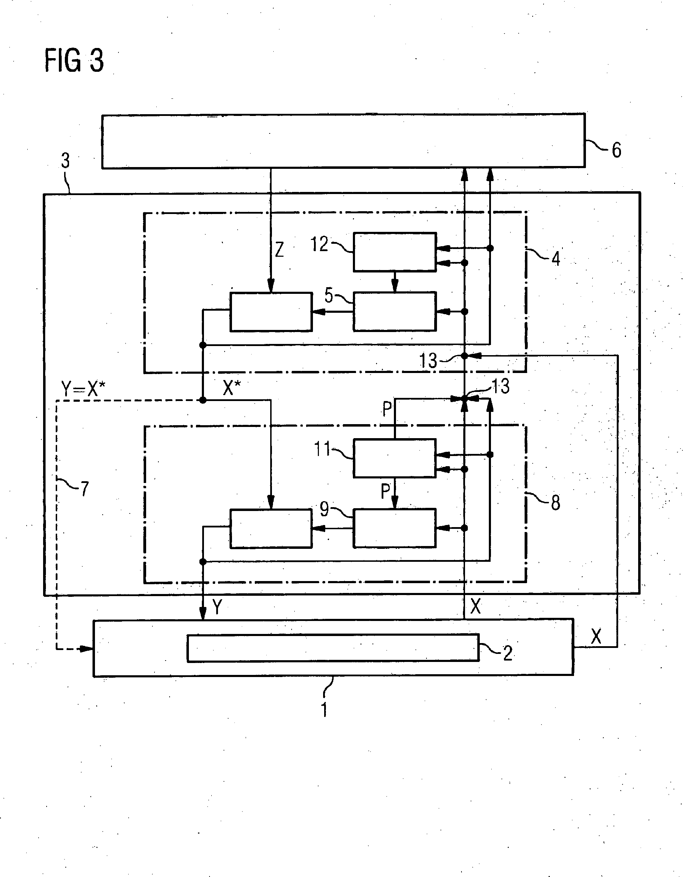

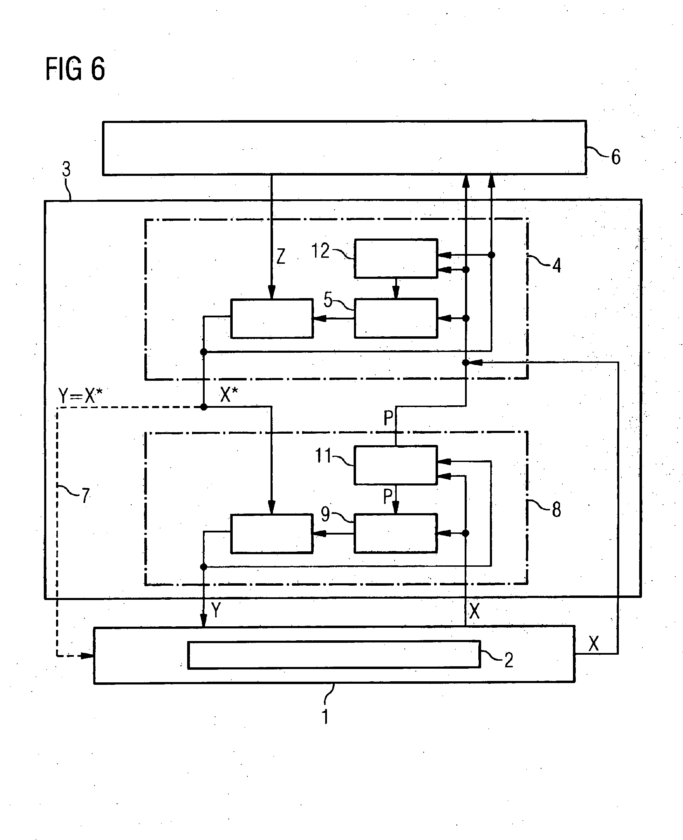

Nachfolgend wird in Verbindung mit den FIG 1 und 2 zunächst der Aufbau eines konventionellen Leitsystems beschrieben. Die Ausführungen zu den FIG 1 und 2 sind hierbei auch für das erfindungsgemäße Leitsystem gültig, das sodann in Verbindung mit den FIG 3 bis 5 näher erläutert wird. Schließlich werden in Verbindung mit den FIG 6 bis 8 mögliche Ausgestaltungen des erfindungsgemäßen Leitsystems der FIG 3 bis 5 näher erläutert.

Gemäß den FIG 1 und 2 weist eine zu steuernde Anlage 1 eine Anzahl von Anlagenteilen 2 auf. In der Regel ist die Anzahl von Anlagenteilen 2 größer als Zehn. In Einzelfällen kann sie auch darunter liegen. Minimal beträgt die Anzahl Eins.

Bei der Anlage 1 kann es sich beispielsweise um ein Walzwerk handeln. In diesem Fall kann jeder Anlagenteil 2 beispielesweise einem Walzgerüst oder einem Abschnitt einer Kühlstrecke des Walzwerks entsprechen. Alternativ kann es sich um eine andere Anlage der Grundstoffindustrie handeln, beispielsweise um eine Anlage der Papierindustrie. In diesem Fall können die einzelnen Anlagenteile 2 beispielsweise einem Kocher, einem ersten und einem zweiten Refiner, einem Trockner usw. entsprechen. Auch andere Arten von Anlagen der Grundstoffindustrie sind möglich.

Die Anlage 1 weist weiterhin ein Leitsystem 3 auf. Das Leitsystem 3 steuert die Anlagenteile 2 (und damit insgesamt die Anlage 1) in koordinierter Weise. Insbesondere ist das Leitsystem 3 derart ausgebildet und wird derart betrieben, wie dies nachfolgend näher erläutert wird.

Das Leitsystem 3 weist einen Sollwertoptimierer 4 auf. Der Sollwertoptimierer 4 weist intern ein Modell 5 der Anlage 1 auf. Der Sollwertoptimierer 4 ermittelt anhand von Zielgrößen Z unter Verwendung des optimiererinternen Modells 5 der Anlage 1 Sollwerte X* für die einzelnen Anlagenteile 2.

Es ist möglich, dass die Zielgrößen Z dem Sollwertoptimierer 4 fest vorgegeben sind. In der Regel jedoch werden die Zielgrößen Z dem Sollwertoptimierer 4 von einem Anwender vorgegeben. Der Anwender ist hierbei in den FIG nicht dargestellt. Die Vorgabe kann direkt oder indirekt über einen Betriebsplanungsrechner 6 erfolgen. Die Zielgrößen Z bestimmen beispielsweise, was produziert werden soll (beispielsweise Papier mit einem bestimmten Flächengewicht und einem bestimmten Weißgrad) und welche Randbedingungen beachtet werden sollen (beispielsweise die Kostensituation für Eingangsmaterialien und Energie).

Im Einzelfall ist es möglich, dass der Sollwertoptimierer 4 von ihm ermittelte Sollwerte X* direkt als Stellgröße Y an Anlagenteile 2 ausgibt. Dies ist durch eine gestrichelte Linie 7 in FIG 2 schematisch dargestellt. In der Regel führt der Sollwertoptimierer 4 jedoch (zumindest für einen Teil der Anlagenteile 2) die jeweiligen Sollwerte X* einer Regeleinrichtung 8 zu. Jede Regeleinrichtung 8 regelt einen Anlagenteil 2, dem die jeweilige Regeleinrichtung 8 zugeordnet ist.

Die Regeleinrichtungen 8 sind gemäß den FIG 1 und 2 als modellbasierte Regler ausgebildet. Modellbasiert ist hierbei ein Regler, wenn er seine Stellgröße Y unter Verwendung eines Modells der von ihm geregelten Regelstrecke ermittelt. Die modellbasierten Regler 8 können beispielsweise als modellpradiktive Regler ausgebildet sein. Modellprädiktive Regler als solche sind hierbei allgemein bekannt und beispielsweise in dem eingangs genannten Fachaufsatz von Dittmar und Pfeiffer beschrieben.

Die modellbasierten Regler 8 nehmen weiterhin Istwerte X entgegen. Die Istwerte X stammen hierbei zumindest von dem Anlagenteil 2, den die jeweiligen modellbasierten Regler 8 regeln. Gegebenenfalls können zusätzlich auch von anderen Anlagenteilen 2 Istwerte X entgegengenommen werden. Einzelne Istwerte X können also, falls erforderlich, mehreren verschiedenen modellbasierten Reglern 8 zugeführt werden.

Die Istwerte X können gemäß FIG 1 direkt erfasst werden. Ebenso ist es möglich, dass die Istwerte X aus gemessenen Größen abgeleitet werden (sogenannte softsensorisch erfasste Istwerte X).

Die modellbasierten Regler 8 weisen intern jeweils ein Modell 9 des von ihnen geregelten Anlagenteils 2 auf. Die modellbasierten Regler 8 ermitteln anhand der ihnen zugeführten Sollwerte X* und der von ihnen entgegengenommenen Istwerte X unter Verwendung des jeweiligen reglerinternen Modells 9 des von ihnen geregelten Anlagenteils 2 Stellgrößen Y für den jeweiligen Anlagenteil 2. Die von ihnen ermittelten Stellgrößen Y geben die jeweiligen modellbasierten Regler 8 an den jeweiligen Anlagenteil 2 aus, beispielsweise an nicht dargestellte unterlagerte Regler. Dadurch wird die Anlage 1 vom Leitsystem 3 gesteuert. Der Begriff "gesteuert" wird hierbei im Rahmen der vorliegenden Erfindung im allgemeinen Sinne von "kontrolliert" verwendet. Es soll also offen bleiben, ob eine Steuerung (englisch: open loop control) im engeren Sinne oder eine Regelung (englisch: closed loop control) realisiert ist. Auch ist die Ausgestaltung der unterlagerten Regler im Rahmen der vorliegenden Erfindung von untergeordneter Bedeutung. Es kann sich beispielsweise um Einfachregler oder um kaskadierte Regler handeln. Auch eine Ausgestaltung als verteiltes Steuerungssystem (DCS = distributed control system) ist möglich.

Es ist möglich, dass eine Koordinationseinrichtung 10 vorhanden ist, welche die einzelnen modellbasierten Regler 8 koordiniert. Eine derartige Koordinationseinrichtung 10 ist in der Regel nur bei größeren Anlagen 1 vorhanden.

Soweit bisher beschrieben entspricht das Leitsystem 3 einem im Stand der Technik bekannten Leitsystem. Dieselben Ausgestaltungen können auch bei einem erfindungsgemäßen Leitsystem 3 vorhanden sein, das nachfolgend in Verbindung mit den FIG 3 bis 5 näher erläutert wird. In FIG 3 ist hierbei nur einer der modellbasierten Regler 8 dargestellt. Der dargestellte modellbasierte Regler 8 steht also stellvertretend für alle modellbasierten Regler 8.

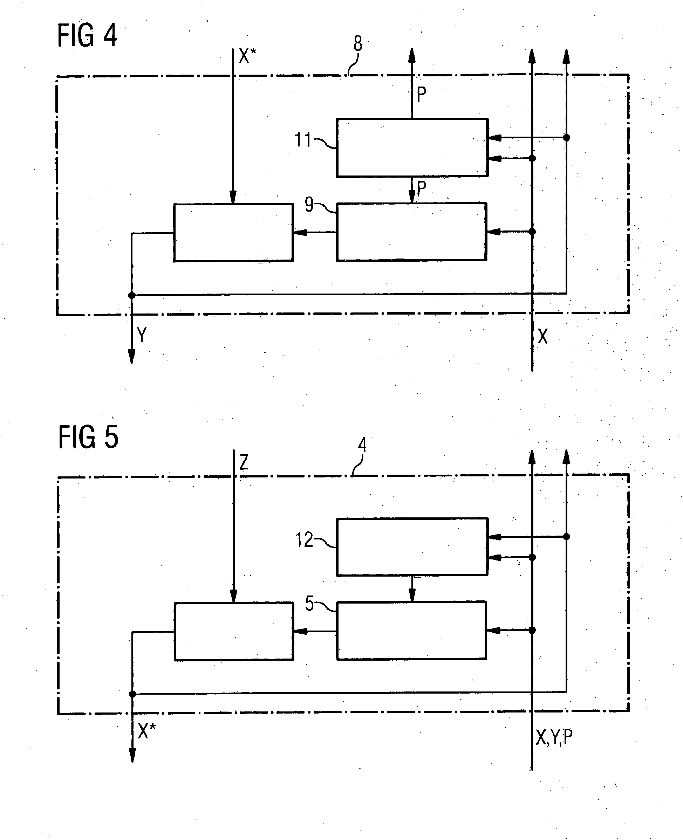

Gemäß FIG 3 - siehe ergänzend FIG 4 - ist den modellbasierten Reglern 8 jeweils ein Modellidentifizierer 11 zugeordnet. Die Modellidentifizierer 11 sind hierbei in der Regel fest programmiert. Dies ist jedoch nicht zwingend erforderlich.

Jeder Modellidentifizierer 11 nimmt die Stellgrößen Y entgegen, die von dem entsprechenden modellbasierten Regler 8 dem jeweiligen Anlagenteil 2 zugeführt werden. Jeder Modellidentifizierer 11 nimmt weiterhin die Istwerte X entgegen, die dem jeweiligen modellbasierten Regler 8 zugeführt werden. Anhand der von ihm entgegengenommenen Stellgrößen Y und Istwerte X ermittelt der jeweilige Modellidentifizierer 11 Parameter P. Anhand der Parameter P optimiert der jeweilige Modellidentifizierer 11 das reglerinterne Modell 9 des jeweiligen Anlagenteils 2.

Die Modellidentifizierer 11 führen die von ihnen ermittelten Parameter P dem Sollwertoptimierer 4 zu. Der Sollwertoptimierer 4 weist - siehe ergänzend FIG 5 - intern ebenfalls einen Modellidentifizierer 12 auf. Der Modellidentifizierer 12 ist in der Regel frei programmierbar. Dies ist jedoch nicht zwingend erforderlich. Mittels des Modellidentifizierers 12 nimmt der Sollwertoptimierer 4 die ihm zugeführten Parameter P entgegen. Der Modellidentifizierer 12 des Sollwertoptimierers 4 optimiert sodann unter Verwendung der von ihm entgegengenommenen Parameter P das optimiererinterne Modell 5 der Anlage 1.

Wie in FIG 3 dargestellt, ist es möglich, dass der Sollwertoptimierer 4 (bzw. dessen Modellidentifizierer 12) zusätzlich die Stellgrößen Y und die Istwerte X entgegennimmt, die von den modellbasierten Reglern 8 ausgegeben werden bzw. die den modellbasierten Reglern 8 zugeführt werden. In diesem Fall kann der Sollwertoptimierer 4 (bzw. dessen Modellidentifizierer 12) die zusätzlich entgegengenommenen Stellgrößen Y und die zusätzlich entgegengenommenen Istwerte X bei der Optimierung des optimiererinternen Modells 5 der Anlage 1 berücksichtigen. Der guten Ordnung halber sei hierbei darauf hingewiesen, dass die Knotenpunkte 13 in FIG 3 nicht Additionsknotenpunkte oder dergleichen sind, sondern lediglich symbolisieren sollen, dass dem jeweiligen Knotenpunkt 13 von mehreren Stellen entsprechende Werte X, Y, P zugeführt werden und von dem jeweiligen Knotenpunkt 13 alle ihm zugeführten Werte X, Y, P weitergeleitet werden.

Alternativ zu der zuletzt beschriebenen Ausgestaltung (Stichwort "zusätzliches Zuführen von Stellgrößen Y und Istwerten X") ist es gemäß FIG 6 möglich, dass der Sollwertoptimierer 4 (bzw. dessen Modellidentifizierer 12) die von den modellbasierten Reglern 8 ausgegebenen Stellgrößen Y und die den modellbasierten Reglern 8 zugeführten Istwerte X nicht entgegennimmt. In diesem Fall ist es selbstverständlich nicht möglich, dass der Sollwertoptimierer 4 (bzw. dessen Modellidentifizierer 12) die entsprechenden Stellgrößen Y und die entsprechenden Istwerte X bei der Optimierung des optimiererinternen Modells 5 der Anlage 1 berücksichtigt.

Unabhängig davon, ob dem Modellidentifizierer 12 die von den modellbasierten Reglern 8 ausgegebenen Stellgrößen Y und die den modellbasierten Reglern 8 zugeführten Istwerte X zugeführt werden oder nicht, ist es möglich, dass der Sollwertoptimierer 4 (bzw. dessen Modellidentifizierer 12) zusätzlich von der Anlage 1 andere Istwerte X entgegennimmt, die den modellbasierten Reglern 8 nicht zugeführt werden. Diese Istwerte X kann der Sollwertoptimierer 4 (bzw. dessen Modellidentifizierer 12) in diesem Fall bei der Optimierung des optimiererinternen Modells 5 der Anlage 1 berücksichtigen. Weiterhin ist es möglich, dass der Sollwertoptimierer 4 bei der Optimierung des optimiererinternen Modells 5 der Anlage 1 die Sollwerte X* berücksichtigt, die er an die modellbasierten Regler 8 ausgibt. Dies ist in den FIG 3, 5 und 6 dadurch symbolisiert, dass die Sollwerte X* nicht nur den modellbasierten Reglern 8, sondern auch dem Modellidentifizierer 12 des Sollwertoptimierers 4 zugeführt werden.

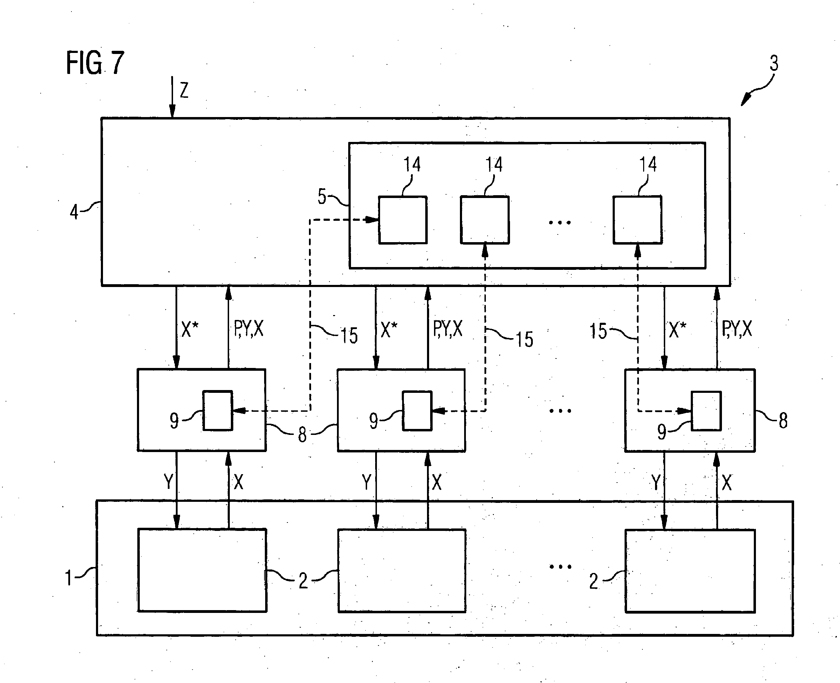

Das optimiererinterne Modell 5 der Anlage 1 kann anders ausgestaltet sein als die Modelle 9 der Anlagenteile 2 in ihrer Gesamtheit. Insbesondere kann das optimiererinterne Modell 5 der Anlage 1 einfacher, komplexer oder schlichtweg anders ausgebildet sein. Es kann, wie in den FIG 3 und 6 dargestellt, als einheitliches Modell 5 der Anlage 1 ausgebildet sein. Alternativ ist es gemäß FIG 7 möglich, dass das optimiererinterne Modell 5 der Anlage 1 eine Anzahl von Teilmodellen 14 aufweist. Jedes Teilmodell 14 korrespondiert in diesem Fall vorzugsweise mit je einem der reglerinternen Modelle 9 der Anlagenteile 2, die in den modellbasierten Reglern 8 realisiert sind. Die entsprechende Korrespondenz ist hierbei in FIG 7 durch entsprechende gestrichelte Linien 15 dargestellt.

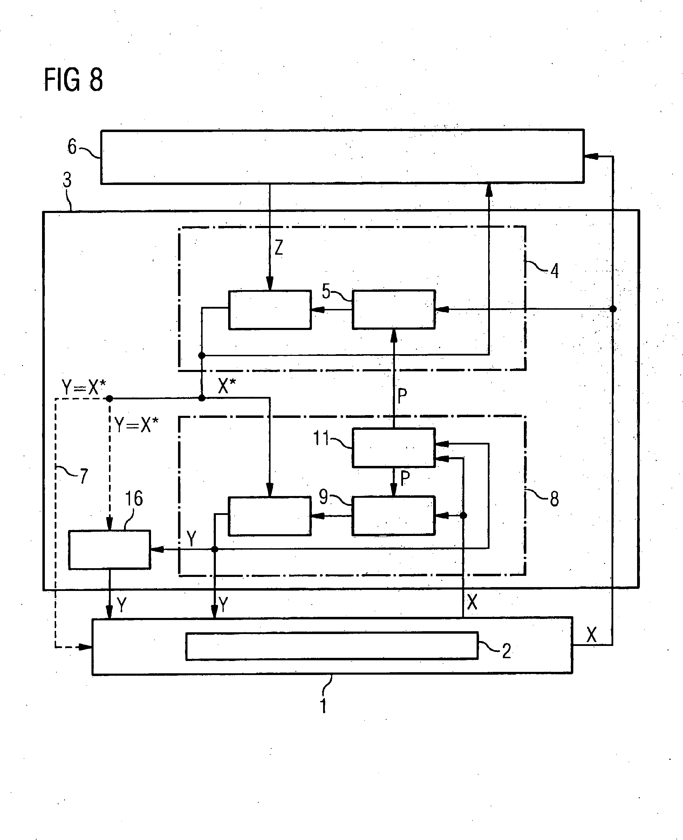

Insbesondere in dem Fall, dass das optimiererinterne Modell 5 der Anlage 1 entsprechende Teilmodelle 14 aufweist, ist es möglich, dass die Teilmodelle 14 mit den reglerinternen Modellen 9 der Anlagenteile 2 identisch sind. Der dem Sollwertoptimierer 4 zugeordnete Modellidentifizierer 12 kann in diesem Fall extrem einfach ausgebildet sein. Denn in diesem Fall ist es lediglich erforderlich, dass der Modellidentifizierer 12 die von ihm entgegengenommenen Parameter P 1:1 an die entsprechenden Teilmodelle 14 weitergibt. Im einfachsten Fall - siehe FIG 8 - kann der Modellidentifizierer 12 sogar vollständig entfallen.

FIG 8 zeigt weiterhin eine weitere Modifikation des Leitsystems 3 von FIG 7. Die letztgenannte Modifikation ist hierbei ebenfalls bei den Leitsystemen 3 der FIG 3 und 6 realisierbar.

Gemäß FIG 8 wird eine für einen der Anlagenteile 2 bestimmte Stellgröße Y sowohl vom Sollwertoptimierer 4 als auch vom korrespondierenden modellbasierten Regler 8 ermittelt. Beide (vorläufige) Stellgrößen Y werden in diesem Fall einem Verknüpfungselement 16 zugeführt. Das Verknüpfungselement 16 ermittelt durch Verknüpfung der beiden ihm zugeführten Stellgrößen Y eine (endgültige) Stellgröße Y, die an den jeweiligen Anlagenteil 2 ausgegeben wird.

Die vorliegende Erfindung weist viele Vorteile auf. Insbesondere ist auf Grund der vorliegenden Erfindung auf einfache Weise eine Online-Optimierung der reglerinternen Modelle 9 der Anlagenteile 2 und parallel hierzu eine Online-Optimierung des optimiererinternen Modells 5 der Anlage 1 möglich. Weiterhin stellen auf Grund der erfindungsgemäßen Vorgehensweise die modellbasierten Regler 8 dem Sollwertoptimierer 4 Informationen zur Verfügung, so dass das Modell 5 der Anlage 1 nicht aus mathematisch-physikalischen Grundprinzipien hergeleitet werden muss und auch nicht notwendigerweise mittels des Modellidentifizierers 12 bestimmt werden muss. Auf Grund des Eingriffs des Sollwertoptimierers 4 in die modellbasierten Regler 8 kann weiterhin das Verhalten der modellbasierten Regler 8 leicht den Anlagenerfordernissen angepasst werden, ohne anlagenspezifische Änderungen der modellbasierten Regler 8 vornehmen zu müssen.

Der Sollwertoptimierer 4 und die modellbasierten Regler 8 können als Hardwareeinrichtungen ausgebildet sein. In vielen Fällen sind sie jedoch softwaretechnisch realisiert. Typischerweise bilden in diesem Fall der Sollwertoptimierer 4 und die modellbasierten Regler 8 getrennte Prozesse. Die getrennten Prozesse können hierbei alternativ auf derselben oder auf getrennter Hardware ablaufen.

Die erfindungsgemäßen Ausgestaltungen können prinzipiell bei beliebigen Anlagen 1 realisiert werden. Besonders vorteilhaft jedoch ist die Anwendung bei Anlagen 1, die sich physikalisch (d.h. mit auf physikalischen, chemischen oder anderen naturwissenschaftlichen Grundgesetzen basierenden Gleichungen, insbesondere algebraischen und Differentialgleichungen) nicht oder nur schlecht oder nur mit unverhältnismäßig großem Aufwand modellieren lassen.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für ein Leitsystem (3) einer Anlage (1) der Grundstoffindustrie, die eine Anzahl von Anlagenteilen (2) aufweist,
- wobei ein Sollwertoptimierer (4) des Leitsystems (3) anhand vorgegebener Zielgrößen (Z) unter Verwendung eines optimiererinternen Modells (5) der Anlage (1) Sollwerte (X*) für die einzelnen Anlagenteile (2) ermittelt,
- wobei der Sollwertoptimierer (4) zumindest für einen Teil der Anlagenteile (2) die jeweiligen Sollwerte (X*) einem den jeweiligen Anlagenteil (2) regelnden jeweiligen modellbasierten Regler (8) des Leitsystems (3) zuführt,
- wobei die jeweiligen modellbasierten Regler (8) zumindest von dem jeweiligen Anlagenteil (2) Istwerte (X) entgegen nehmen,
- wobei die jeweiligen modellbasierten Regler (8) anhand der ihnen zugeführten Sollwerte (X*) und von ihnen entgegen genommener Istwerte (X) unter Verwendung eines reglerinternen Modells (9) des von ihnen geregelten Anlagenteils (2) Stellgrößen (Y) für den jeweiligen Anlagenteil (2) ermitteln,
- wobei die jeweiligen modellbasierten Regler (8) die von ihnen ermittelten Stellgrößen (Y) an den jeweiligen Anlagenteil (2) ausgeben,
- wobei ein dem jeweiligen modellbasierten Regler (8) jeweils zugeordneter Modellidentifizierer (11) die von dem jeweiligen modellbasierten Regler (8) an den jeweiligen Anlagenteil (2) ausgegebenen Stellgrößen (Y) und die dem jeweiligen modellbasierten Regler (8) zugeführten Istwerte (X) entgegen nimmt, anhand der von ihm entgegen genommenen Stellgrößen (Y) und Istwerte (X) Parameter (P) ermittelt und anhand der Parameter (P) das reglerinterne Modell (9) des jeweiligen Anlagenteils (2) optimiert,
- wobei der Sollwertoptimierer (4) von den Modellidentifizierern (11) die von den Modellidentifizierern (11) ermittelten Parameter (P) entgegen nimmt und unter Verwendung der von ihm entgegen genommenen Parameter (P) und der von ihm den modellbasierten Reglern (8) zugeführten Sollwerte (X*) das optimiererinterne Modell (5) der Anlage (1) optimiert.

2. Betriebsverfahren nach Anspruch 1,
**dadurch gekennzeichnet, dass** der Sollwertoptimierer (4) zusätzlich die von den modellbasierten Reglern (8) ausgegebenen Stellgrößen (Y) und die den modellbasierten Reglern (8) zugeführten Istwerte (X) entgegen nimmt und bei der Optimierung des optimiererinternen Modells (5) der Anlage (1) berücksichtigt.

3. Betriebsverfahren nach Anspruch 1,
**dadurch gekennzeichnet, dass** der Sollwertoptimierer (4) die von den modellbasierten Reglern (8) ausgegebenen Stellgrößen (Y) und die den modellbasierten Reglern (8) zugeführten Istwerte (X) nicht entgegen nimmt.

4. Betriebsverfahren nach Anspruch 1, 2 oder 3,
**dadurch gekennzeichnet, dass** das optimiererinterne Modell (5) der Anlage (1) mit den reglerinternen Modellen (9) der Anlagenteile (2) korrespondierende Teilmodelle (14) aufweist.

5. Betriebsverfahren nach einem der obigen Ansprüche,
**dadurch gekennzeichnet, dass** der Sollwertoptimierer (4) zusätzlich von der Anlage (1) andere als die den modellbasierten Reglern (8) zugeführten Istwerte (X) entgegen nimmt und bei der Optimierung des optimiererinternen Modells (5) der Anlage (1) berücksichtigt.

6. Betriebsverfahren nach einem der obigen Ansprüche,
**dadurch gekennzeichnet, dass** mindestens eine für einen der Anlagenteile (2) bestimmte Stellgröße (Y) sowohl vom Sollwertoptimierer (4) als auch vom korrespondierenden modellbasierten Regler (8) ermittelt wird und dass die an den jeweiligen Anlagenteil (2) ausgegebene Stellgröße (Y) durch Verknüpfung der beiden ermittelten Stellgrößen (Y) ermittelt wird.

7. Leitsystem, das derart ausgebildet ist, dass es im Betrieb ein Betriebsverfahren nach einem der obigen Ansprüche ausführt.

8. Anlage der Grundstoffindustrie, die eine Anzahl von Anlagenteilen (2) und ein die Anlagenteile (2) in koordinierter Weise steuerndes Leitsystem (3) aufweist, wobei das Leitsystem (3) nach Anspruch 7 ausgebildet ist.

9. Anlage der Grundstoffindustrie nach Anspruch 8,
**dadurch gekennzeichnet, dass** sie als Anlage der Papierindustrie ausgebildet ist.

## Claims

1. Operating method for a control system (3) of a plant (1) of the primary industry, having a number of plant sections (2),
- wherein a setpoint value optimiser (4) of the control system (3) establishes setpoint values (X*) for the individual plant sections (2) on the basis of predetermined target variables (Z) using an optimiser-internal model (5) of the plant (1),
- wherein the setpoint value optimiser (4), at least for some of the plant sections (2), supplies the respective setpoint values (X*) to a respective model-based regulator (8) of the control system (3) regulating the respective plant section (2),
- wherein the respective model-based regulators (8) accept actual values (X) at least from the respective plant section (2),
- wherein the respective model-based regulators (8), on the basis of the setpoint values (X*) supplied to them and actual values (X) accepted by them, using a regulator-internal model (9) of the plant section (2) regulated by them, establish adjustment variables (Y) for the respective plant section (2),
- wherein the respective model-based regulators (8) output the adjustment variables (Y) established by them to the respective plant section (2),
- wherein a model identifier (11) assigned to the respective model-based regulator (8) in each case, accepts the adjustment variables (Y) output by the respective model-based regulator (8) to the respective plant section (2) and the actual values (X) supplied to the respective model-based regulator (8), establishes parameters (P) on the basis of adjustment variables (Y) and actual values (X) accepted by it and optimises the regulator-internal model (9) of the respective plant section (2) on the basis of the parameters (P),
- wherein the setpoint value optimiser (4) accepts from the model identifiers (11) the parameters (P) established by the model identifiers (11) and, using the parameters (P) accepted by it and the setpoint values (X*) supplied by it to the model-based regulators (8), optimises the optimiser-internal model (5) of the plant (1).

2. Operating method according to claim 1,
**characterised in that** the setpoint value optimiser (4) additionally accepts the adjustment variables (Y) output by the model-based regulators (8) and the actual values (X) supplied to the model-based regulators (8) and takes account of them in the optimisation of the optimiser-internal model (5) of the plant (1).

3. Operating method according to claim 1,
**characterised in that** the setpoint value optimiser (4) does not accept the adjustment variables (Y) output by the model-based regulators (8) and the actual values (X) supplied to the model-based regulators (8).

4. Operating method according to claim 1, 2 or 3,
**characterised in that** the optimiser-internal model (5) of the plant (1) has submodels (14) corresponding to the regulator-internal models (9) of the plant sections (2).

5. Operating method according to one of the preceding claims,
**characterised in that** the setpoint value optimiser (4) additionally accepts from the plant (1) actual values (X) other than those supplied to the model-based regulators (8) and takes them into account in the optimisation of the optimiser-internal model (5) of the plant (1).

6. Operating method according to one of the preceding claims,
**characterised in that** at least one adjustment variable (Y) for one of the plant sections (2) is established both by the setpoint value optimiser (4) and also by corresponding model-based regulators (8) and that the adjustment variable (Y) output to the respective plant section (2) is established by linking the two adjustment variables (Y) established.

7. Control system which is embodied such that in operation it executes a method of operation according to one of the above claims.

8. Plant of the primary industry having a number of plant sections (2) and a control system (3) controlling the plant sections (2) in a coordinated way, wherein the control system (3) is embodied according to claim 7.

9. Plant of the primary according to claim 8,
**characterised in that** it is embodied as a plant of the paper industry.

## Revendications

1. Procédé pour faire fonctionner un système ( 3 ) de conduite d'une installation ( 1 ) de l'industrie des matières premières, qui a un certain nombre de parties ( 2 ) d'installation,
- dans lequel un optimiseur ( 4 ) de valeurs de consigne du système ( 3 ) de conduite détermine, au moyen de grandeurs ( Z ) cibles données à l'avance, et en utilisant un modèle ( 5 ) interne d'optimisation de l'installation ( 1 ), des valeurs ( X* ) de consigne pour les diverses parties ( 2 ) de l'installation,
- dans lequel l'optimiseur ( 4 ) de valeurs de consigne envoie, au moins pour une partie des parties ( 2 ) de l'installation, les valeurs ( X* ) de consigne respectives à un régleur ( 8 ) du système ( 3 ) de conduite, réglant la partie ( 2 ) respective de l'installation et reposant respectivement sur un modèle,
- dans lequel les régleurs ( 8 ) respectifs reposant sur un modèle reçoivent des valeurs ( X ) réelles d'au moins la partie ( 2 ) respective de l'installation,
- dans lequel les régleurs ( 8 ) respectifs reposant sur un modèle déterminent, à l'aide des valeurs ( X* ) de consigne qui leur sont envoyées et des valeurs ( X ) réelles qu'ils reçoivent, en utilisant un modèle ( 9 ) interne aux régleurs de la partie ( 2 ) d'installation régulée par eux, des grandeurs ( Y ) de réglage de la partie ( 2 ) respective de l'installation,
- dans lequel les régleurs ( 8 ) respectifs reposant sur un modèle émettent, vers la partie ( 2 ) respective de l'installation, les grandeurs ( Y ) de réglage qu'ils ont déterminées,
- dans lequel un identificateur ( 11 ) de modèle, associé respectivement au régleur ( 8 ) respectif reposant sur un modèle, reçoit les grandeurs ( Y ) de réglage émises par le régleur ( 8 ) respectif reposant sur un modèle vers la partie ( 2 ) respective d'installation et reçoit les valeurs ( X ) réelles envoyées au régleur ( 8 ) respectif reposant sur un modèle, détermine des paramètres ( P ) à l'aide des grandeurs ( Y ) de réglage et des valeurs ( X ) réelles qu'il a reçues et, à l'aide des paramètres ( P ), optimise le modèle ( 9 ) interne au régleur de la partie ( 2 ) respective d'installation,
- dans lequel l'optimiseur ( 4 ) de valeurs de consigne reçoit, des identificateurs ( 11 ) de modèle, les paramètres ( P ) déterminés par les identificateurs ( 11 ) de modèle, et, en utilisant les paramètres ( P ) qu'il a reçu et des valeurs ( X* ) de consigne qu'il a envoyées au régleur ( 8 ) reposant sur un modèle, optimise le modèle ( 5 ) interne d'optimisation de l'installation ( 1 ).

2. Procédé suivant la revendication 1,
**caractérisé en ce que** l'optimiseur ( 4 ) de valeurs de consigne reçoit en outre les grandeurs ( Y ) de réglage émises par les régleurs ( 8 ) reposant sur un modèle et les valeurs ( X ) réelles envoyées aux régleurs ( 8 ) reposant sur un modèle et en tient compte dans l'optimisation du modèle ( 5 ) interne d'optimisation de l'installation ( 1 ).

3. Procédé suivant la revendication 1,
**caractérisé en ce que** l'optimiseur ( 4 ) de valeurs de consigne ne reçoit pas les grandeurs ( Y ) de réglage émises par les régleurs ( 8 ) reposant sur un modèle et les valeurs ( X ) réelles envoyées au régleur ( 8 ) reposant sur un modèle.

4. Procédé suivant la revendication 1, 2 ou 3,
**caractérisé en ce que** le modèle ( 5 ) interne d'optimisation de l'installation ( 1 ) a des modèles ( 14 ) partiels correspondant aux modèles ( 9 ) internes aux régleurs de la partie ( 2 ) de l'installation.

5. Procédé suivant l'une des revendications précédentes,
**caractérisé en ce que** l'optimiseur ( 4 ) de valeurs de consigne reçoit en outre de l'installation ( 1 ) des valeurs ( X ) réelles autres que celles envoyées aux régleurs ( 8 ) reposant sur un modèle et en tient compte dans l'optimisation du modèle ( 5 ) interne d'optimisation de l'installation ( 1 ) .

6. Procédé suivant l'une des revendications précédentes,
**caractérisé en ce qu'**au moins une grandeur ( Y ) de réglage, définie pour l'une des parties ( 2 ) de l'installation, est déterminée à la fois par l'optimiseur ( 4 ) de consigne et par le régleur ( 8 ) correspondant reposant sur un modèle et **en ce que** la grandeur ( Y ) de réglage, émise vers la partie ( 2 ) respective de l'installation, est déterminée par combinaison des deux grandeurs ( Y ) de réglage déterminées.

7. Système de conduite, qui est constitué de manière à exécuter en fonctionnement un procédé de fonctionnement suivant l'une des revendications précédentes.

8. Installation de l'industrie des matières premières, qui a un certain nombre de parties ( 2 ) d'installation et un système ( 3 ) de conduite commandant de manière coordonnée les parties ( 2 ) de l'installation, le système ( 3 ) de conduite étant constitué suivant la revendication 7.

9. Installation de l'industrie des matières premières suivant la revendication 8,
**caractérisée en ce qu'**elle est constituée en installation de l'industrie papetière.
